# EUROPÄISCHE PATENTSCHRIFT

(11) **EP 1 639 850 B1**
(45) Veröffentlichungstag und Bekanntmachung des Hinweises auf die Patenterteilung: **20.05.2015**
(21) Anmeldenummer: 04740203.7
(22) Anmeldetag: 23.06.2004
(51) Int. Cl.: H04W 4/12, H04L 12/58, H04M 1/725

(54) **Verfahren zum Übermitteln einer Nachricht bei Nichterreichbarkeit eines Mobilfunkteilnehmers**
Method for transmission of a message on non-availability of a mobile radio user
Procédé pour transmettre un message en cas d'injoignabilité d'un abonné d'un réseau radiotéléphonique mobile

(30) Priorität: 27.06.2003 DE 10329183
(43) Veröffentlichungstag der Anmeldung: 29.03.2006
(73) Patentinhaber: Vodafone Holding GmbH, 40213 Düsseldorf (DE)
(72) Erfinder: MAUSS, Oliver, 41352 Korschenbroich (DE); STUHRMANN, Michaela, 40219 Düsseldorf (DE); NETH, Hannes, 40476 Düsseldorf (DE)
(74) Vertreter: Ring & Weisbrodt
(86) Internationale Anmeldenummer: PCT/EP2004/006783
(87) Internationale Veröffentlichungsnummer: WO 2005/002260

(56) Entgegenhaltungen:
- EP-A- 0 503 813
- EP-A- 0 699 009
- WO-A-02/052881
- US-A1- 2002 159 572
- US-B1- 6 311 057

## Beschreibung

### Technisches Gebiet

Die Erfindung betrifft ein Verfahren für ein Mobilfunknetz zur Kommunikation mit einem Mobilfunkteilnehmer, welcher unmittelbar nicht erreichbar ist, wobei der Mobilfunkteilnehmer ein Mobilfunkendgerät verwendet, welches übermittelte Nachrichten verarbeiten kann *und der Anrufer (A) dem Mobilfunkteilnehmer (B) eine Nachricht während des Verbindungsversuchs übermittelt.*

### Stand der Technik

Mobilfunknetze, insbesondere nach dem GSM- und UMTS-Standard, sind bereits seit längerem bekannt. Über solche Mobilfunknetze kann z.B. ein Teilnehmer "A" mit einem anderen Teilnehmer "B" kommunizieren. Im Folgenden wird der Teilnehmer "A" als derjenige bezeichnet, der versucht, eine Verbindung mit dem Teilnehmer "B" aufzubauen. Als Kommunikationsmittel dienen Mobilfunkendgeräte, zu denen auch "Handys" gehören. Die Kommunikation zwischen den Mobilfunkendgeräten wird über geeignete Vermittlungsstellen hergestellt. Oft kommt eine gewünschte Verbindung zwischen dem Teilnehmer "A" und dem Teilnehmer "B" leider nicht zustande. Die Gründe für das Nichtzustandekommen der Verbindung können mehrere Ursachen haben:

Zum einen kann es vorkommen, dass der jeweils andere Kommunikationspartner "B" die Verbindung bzw. das Gespräch nicht annimmt oder sein Mobilfunkendgerät ausgeschaltet hat. Ferner kann das Nichtzustandekommen der Verbindung darin begründet sein, dass der andere Kommunikationspartner "B" ein Dauergespräch führt oder seine Rufumleitung zu einem anderen Teilnehmer nicht eingerichtet hat. Ein weiterer Grund für das Nichtzustandekommen einer Verbindung kann dadurch kommen, dass der andere Teilnehmer sich in einem "Funkloch" befindet, einem Bereich, der nicht vom Mobilfunknetz abgedeckt wird.

Es kommt jedoch häufig vor, dass es erforderlich ist, dem anderen Teilnehmer "B" unbedingt eine "wichtige" Nachricht zu hinterlassen. Derzeit erhält der Teilnehmer "A" beim Nichtzustandekommen der Verbindung eine künstliche Ansage vom Netzwerkbetreiber, dass der andere Teilnehmer derzeit nicht erreichbar sei. Eine Alternative dazu besteht darin, dass der Teilnehmer "B" seine Mailbox eingeschaltet hat. Diese wird oft erst dann abgehört, wenn die Mitteilung des Teilnehmers "A" an den Teilnehmer "B" nicht mehr aktuell ist.

Die Druckschrift US 2002 0159572 A1 beschreibt ein Verfahren, eine Sprachnachricht in eine Textnachricht umzuwandeln. Ein Anrufer ruft einen Teilnehmer an. Ist der Teilnehmer nicht erreichbar, wird aus der Sprachnachricht des Anrufers durch ein Anrufbeantworter-System eine Text-Nachricht generiert, die dem Teilnehmer zugesandt wird. Text-Nachrichten sind beispielsweise SMS, E-Mail oder Fax. Den Inhalt der Textnachricht kann der Anrufer aber auch aus einer Liste des Anrufbeantworter-System auswählen oder selbst erstellen. Der Teilnehmer hat nach Erhalt der Nachricht die Möglichkeit durch eine Sprach- oder Textmeldung zu antworten, um dem Anrufer zu signalisieren, dass er die Nachricht erhalten hat.

### Offenbarung der Erfindung

Aufgabe der Erfindung ist es daher, ein Verfahren zu schaffen, welches die Nachteile des Standes der Technik beseitigt und einem Teilnehmer im Mobilfunknetz ermöglicht, einem anderen Teilnehmer eine Nachricht zu hinterlassen, auch wenn dieser mit seinem Mobilfunkendgerät temporär nicht erreichbar ist. Dabei soll ein möglichst hoher Bedienungskomfort gewährleistet sein.

Erfindungsgemäß wird die Aufgabe dadurch gelöst, dass bei einem Verfahren der eingangs genannten Art der Anrufer dem Mobilfunkteilnehmer eine Nachricht während des Verbindungsversuchs übermittelt *und in vorgebbaren Intervallabständen durch eine Vermittlungseinheit versucht wird, die Nachricht an den Mobilfunkteilnehmer (B) weiter zu vermitteln und bei Erreichbarkeit des Mobilfunkteilnehmers (B) eine Empfangsbestätigung an den Anrufer (A) zurückgesendet wird.*

Das erfindungsgemäße Verfahren beruht auf dem Prinzip, dem Teilnehmer, der temporär nicht erreichbar ist, in jedem Fall eine Nachricht des Anrufenden zu hinterlassen, auf die er reagieren kann. Überraschenderweise hat sich als vorteilhaft erwiesen, dass durch Übermitteln einer Nachricht während des fehlgeschlagenen Verbindungsaufbaus zu einem temporär nicht erreichbaren Teilnehmer "B", dieser die Nachricht erhält, sobald sein Mobilfunkendgerät wieder empfangsbereit ist. Die Reaktionszeit des angerufenen Teilnehmers "B" lässt sich hierdurch erheblich verkürzen. Auch lässt sich auf diese Weise beispielsweise trotz eingeschalteter Rufumleitung eine Nachricht unmittelbar an den gewünschten Empfänger übermitteln. Der gewünschte Empfänger erhält die Nachricht in jedem Fall.

*Damit sichergestellt werden kann, dass der temporär nicht erreichbare Teilnehmer* "*B*" *die Nachricht erhält, ist vorgesehen, dass in vorgebbaren Intervallabständen durch eine Vermittlungseinheit versucht wird, die Textnachricht an den nicht erreichbaren Mobilfunkteilnehmer "B"weiter zu vermitteln.*

*In einer weiteren Ausgestaltung der Erfindung wird dem anrufenden Teilnehmer* "*A" bei Erreichbarkeit des Mobilfunkteilnehmers "B" eine Empfangsbestätigung zurückgesendet, dass dieser die Nachricht erhalten hat.*

Ein vorteilhafter Aspekt der Erfindung ergibt sich dadurch, dass die Nachricht als Textnachricht, insbesondere als SMS oder EMS, dem Mobilfunkteilnehmer übermittelt wird. Durch diese Maßnahme werden Übermittlungstechniken für die Übermittlung der Nachricht verwendet, die einfach strukturiert und bereits vielfach erprobt sind. Das erfindungsgemäße Verfahren kann so leicht in bestehenden Mobilfunknetzen, ohne großen Aufwand, umgesetzt werden.

Als vorteilhafte Ausgestaltung der Erfindung erweist sich weiterhin, wenn die Nachricht als multimediale Nachricht, insbesondere als Bild, Video oder akustisch, übermittelt wird.

Eine bevorzugte Ausbildung des erfindungsgemäßen Verfahrens ergibt sich dadurch, dass der Anrufer eine vorgegebene Nachricht übermittelt. Damit soll dem anrufenden Teilnehmer das Übermitteln einer Nachricht noch erleichtert werden. Er muss nicht mühsam einen Text über das kleine Bedienerfeld seines Mobilfunkendgerätes eingeben, wenn er beispielsweise lediglich zurückgerufen werden will. Darüber hinaus ist es in vielen Fällen gar nicht möglich eine Textnachricht zu erstellen: Beispielsweise lässt sich beim Nutzen einer Freisprecheinrichtung im Auto oder bei einem Anruf von einem Festnetztelefon keine solche Textnachricht erzeugen. Es zeigt sich dann, dass es besonders vorteilhaft ist, wenn der Anrufer eine vorgegebene Nachricht übermittelt, welche aus einer Anzahl vorgegebener Nachrichten auswählbar ist. So kann er unter verschiedenen vorgegebenen Nachrichten eine auswählen.

Ferner ist es eine vorteilhafte Ausgestaltung des erfindungsgemäßen Verfahrens, wenn der Anrufer eine Text- und/oder multimediale Nachricht selbst erstellt, welche an den Mobilfunkteilnehmer übermittelt wird. Somit muss er nicht allein auf vorgegebene Textnachrichten zurückgreifen, sondern kann auch selbst solche entwerfen.

Eine besonders geeignete Ausbildung des erfindungsgemäßen Verfahrens ergibt sich, wenn Mittel zur Spracherkennung eingesetzt werden, um die Nachricht zu erstellen oder auszuwählen. Mit dieser Maßnahme wird erreicht, dass dem anrufenden Teilnehmer ein weiteres zusätzlich auch einfaches und komfortables Hilfsmittel zur Verfügung gestellt wird, um seine Textnachrichten zu verfassen oder auszuwählen.

Vorteilhafterweise ist bei dem erfindungsgemäßen Verfahren eine Rückrufnummer oder sonstige Identifikationskennung in der Nachricht enthalten. So weiß der angerufene Teilnehmer "B" schließlich immer, wer ihm die Nachricht hinterlassen hat. Damit kann der Teilnehmer "B" auf Wunsch direkt entweder einen Rückruf starten, oder alternativ eine Textnachricht oder eine multimediale Nachricht an den Teilnehmer "A" schicken. Ferner erweist es sich als vorteilhaft, wenn die Rufnummer des Teilnehmers "A" durch den Namen des Teilnehmers "A" ersetzt wird. Voraussetzung dafür ist, dass sich die Nummer mit einem korrespondierenden Namen im Telefonbuch des Teilnehmers "B" entweder auf der SIM-Karte oder im verwendeten Mobilfunkendgerät befindet, dem die Nummer zugeordnet werden kann. Anhand des Namens kann der Teilnehmer "B" viel besser einschätzen, ob und wenn ja wie eine Reaktion auf die von Teilnehmer "A" hinterlassenen Nachricht erfolgen kann.

Eine bevorzugte Ausgestaltung der Erfindung ergibt sich weiterhin dadurch, dass die Nachricht an einen weiteren Kommunikationsteilnehmer weiter- oder umgeleitet wird. So kann gewährleistet werden, dass zumindest ein Empfänger diese Nachricht erhält, auch wenn der gewünschte Teilnehmer diese nicht unmittelbar erhält.

Die Nachrichten können in einer bevorzugten Ausführung des erfindungsgemäßen Verfahrens mit verschiedenen Dringlichkeitsstufen übermittelt werden. Dadurch weiß der Empfänger, wie eilig bzw. wichtig die Nachricht möglicherweise ist.

Weitere Vorteile ergeben sich aus dem Gegenstand der Unteransprüche sowie der Zeichnung mit der dazugehörigen Beschreibung.

### Kurze Beschreibung der Zeichnung

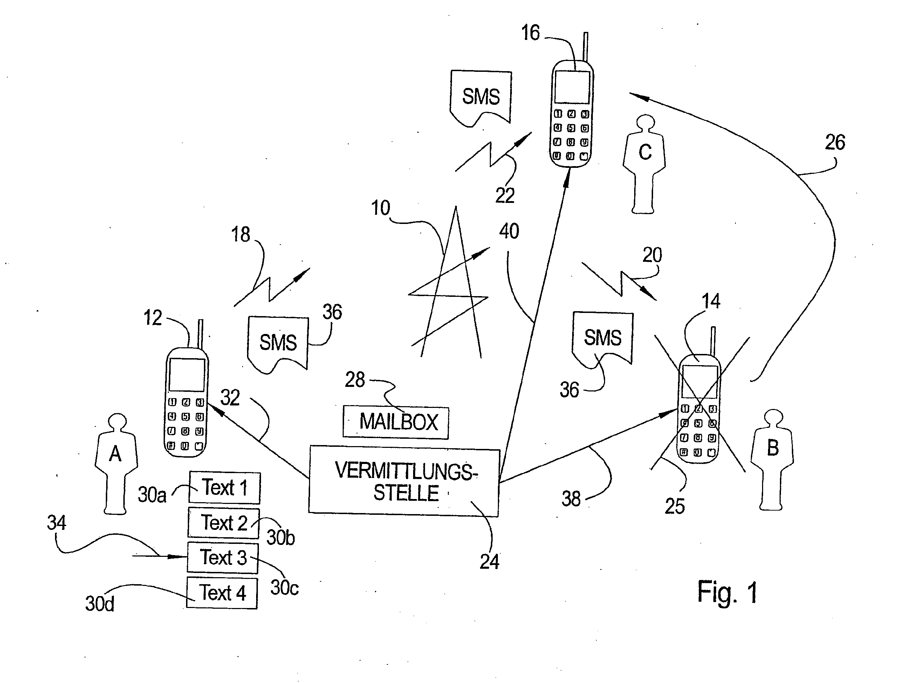

- Fig. 1: zeigt in einer schematischen Prinzipskizze das erfindungsgemäße Verfahren.

### Bevorzugtes Ausführungsbeispiel

In Fig. 1 wird mit 10 ein Mobilfunknetz bezeichnet, welches durch einen Sende- und Empfangsmast symbolisiert wird. Das Mobilfunknetz arbeitet vorzugsweise nach dem GSM- oder UMTS-Standard. Über das Mobilfunknetz 10 können Teilnehmer A, B, C, welche als stilisierte Männchen dargestellt sind, miteinander kommunizieren. Sie verfügen dazu jeweils über Mobilfunkendgeräte 12, 14, 16. Die Kommunikation zwischen den Mobilfunkendgeräten im Mobilfunknetz 10 erfolgt über Funk, was durch die zackigen Pfeile 18, 20, 22 dargestellt wird.

Das Mobilfunknetz 10 verfügt über eine Vermittlungsstelle 24. Wenn der Teilnehmer A versucht den Teilnehmer B zu erreichen, so leitet die Vermittlungsstelle 24 den Verbindungswunsch an den Teilnehmer B weiter. Ist der Teilnehmer B erreichbar, kann dieser den Gesprächswunsch annehmen oder ggf. auch ablehnen.

Falls der Teilnehmer B selbst nicht erreichbar ist, was mit dem Kreuz 25 dargestellt wird, kann er das Gespräch an einen weiteren Kommunikationspartner, beispielsweise den Teilnehmer C, weiterleiten Er muss hierzu lediglich seine Rufumleitung 26 einstellen. Der Gesprächswunsch wird dann direkt an das Mobilfunkendgerät 16 des Teilnehmers C weitergeleitet.

Bei Nichterreichbarkeit des Teilnehmers B kann alternativ auch eine sogenannte "Mailbox" 28 eingeschaltet sein. Dabei handelt es sich um eine Aufnahmeeinrichtung, die der Mobilfunknetzbetreiber zur Verfügung stellt, um Sprachnachrichten eines Anrufers, beispielsweise Mobilfunkteilnehmer A, zu speichern. Ist weder die Mailbox 28 noch die Rufumleitung 26 eingeschaltet, wird dem anrufenden Teilnehmer A durch die Vermittlungsstelle 24 eine Ansage übermittelt, dass der Teilnehmer B nicht erreichbar ist. Bei der stehenden Verbindung zu der Vermittlungsstelle 24 wird dem anrufenden Teilnehmer A angeboten, dem Teilnehmer B eine Nachricht zu übersenden. Im Falle, dass der Teilnehmer A das Angebot annimmt, werden ihm vorgefertigte Texte 30a, 30b, 30c, 30d zur Auswahl gegeben. Die Texte 30a, 30b, 30c, 30d werden dazu von der Vermittlungsstelle 24 an den Teilnehmer A übermittelt, Pfeil 32. Einen dieser Texte 30a, 30b, 30c, 30d kann er an den gewünschten Teilnehmer B schicken. Im vorliegenden Ausführungsbeispiel wird der dritte Text 30c zum Versenden ausgewählt, Pfeil 34. Dieser Text 30c (z.B. *"Ruf mich dringend zurück*!") wird als Nachricht 36 schließlich über das Mobilfunknetz, z.B. als SMS (= Short Message Service), an den Teilnehmer B versendet.

Anstatt, dass der Teilnehmer A vorgefertigte Nachrichtentexte 30a, 30b, 30c, 30d versendet, kann er auch selbst eine geeignete Nachricht 36 erstellen und ihr ggf. sogar ein digitales Bild/Foto beifügen. In der SMS ist neben der unmittelbaren Nachricht 36 auch die Rufnummer des Teilnehmers A oder eine sonstige Identifikationskennung enthalten, damit der Teilnehmer B eine Nummer hat, die er zurückrufen kann bzw. weiß, wer überhaupt angerufen hat.

Die SMS wird auf dem üblichen Wege des Mobilfunknetzes 10, d.h. insbesondere über die Vermittlungsstelle 24, an das Mobilfuzikendgerät 14 übermittelt, Pfeil 38. Während des gesamten Vorgangs bleibt eine Verbindung zum Mobilfunknetz bzw. zu der Vermittlungsstelle 24 bestehen. Wahlweise kann der SMS eine Dringlichkeitsstufe zugeordnet werden. Mit der Dringlichkeitsstufe wird im vorliegenden Ausführungsbeispiel gleichzeitig das Zeitintervall festgelegt, mit dem versucht werden soll, die SMS an den Teilnehmer B zu übermitteln. Je höher die Dringlichkeitsstufe desto öfter findet eine Überprüfung statt, ob der Teilnehmer B bereits wieder erreichbar ist. Sobald der Teilnehmer B, d.h. das Mobilfunkendgerät 14 Empfangsbereitschaft signalisiert, wird die SMS übermittelt.

Es kann voreingestellt werden, dass die SMS durch die Vermittlungsstelle 24 gleichzeitig auch an einen weiteren Teilnehmer C weitergeleitet wird, Pfeil 40. Damit wird die Wahrscheinlichkeit erhöht, dass die SMS schnellstmöglich von jemandem gelesen wird. Es besteht ebenso die Möglichkeit, die SMS an den Teilnehmer B zu versenden, auch wenn dieser eine Rufumleitung 26 eingestellt hat.

## Patentansprüche

1. Verfahren für ein Mobilfunknetz (10) zur Kommunikation mit einem Mobilfunkteilnehmer B, welcher unmittelbar nicht erreichbar ist, wobei der Mobilfunkteilnehmer B ein Mobilfunkendgerät (14) verwendet, welches übermittelte Nachrichten (36) verarbeiten kann, der Anrufer A dem Mobilfunkteilnehmer B eine Nachricht (36) während des Verbindungsversuchs übermittelt ***dadurch gekenntzeichnet, dass** in vorgebbaren Intervallabständen durch eine Vermittlungseinheit (24) versucht wird, die Nachricht (36) an den Mobilfunkteilnehmer B weiter zu vermitteln und bei Erreichbarkeit des Mobilfunkteilnehmers B eine Empfangsbestätigung an den Anrufer A zurückgesendet wird.*

2. Verfahren für ein Mobilfunknetz (10) zur Kommunikation mit einem Mobilfunkteilnehmer B, welcher unmittelbar nicht erreichbar ist, nach Anspruch 1, **dadurch gekennzeichnet, dass** die Nachricht (36) als Textnachricht, insbesondere als SMS oder EMS, dem Mobilfunkteilnehmer B übermittelt wird.

3. Verfahren für ein Mobilfunknetz (10) zur Kommunikation mit einem Mobilfunkteilnehmer B, welcher unmittelbar nicht erreichbar ist, nach Anspruch 1, **dadurch gekennzeichnet, dass die** Nachricht (36) als multimediale Nachricht, insbesondere als Bild, Video oder akustisch, übermittelt wird.

4. Verfahren für ein Mobilfunknetz (10) zur Kommunikation mit einem Mobilfunkteilnehmer B, welcher unmittelbar nicht erreichbar ist, nach einem der Ansprüche 1 bis 3, **dadurch gekennzeichnet, dass** der Anrufer A eine vorgegebene Nachricht 36 übermittelt.

5. Verfahren für ein Mobilfunknetz (10) zur Kommunikation mit einem Mobilfunkteilnehmer B, welcher unmittelbar nicht erreichbar ist, nach Anspruch 4, **dadurch gekennzeichnet, dass** der Anrufer A eine vorgegebene Nachricht (36) übermittelt, welche aus einer Anzahl vorgegebener Nachrichten (30a, 30b, 30c, 30d) auswählbar ist.

6. Verfahren für ein Mobilfunknetz (10) zur Kommunikation mit einem Mobilfunkteilnehmer B, welcher unmittelbar nicht erreichbar ist, nach einem der Ansprüche 1 bis 3, **dadurch gekennzeichnet, dass** der Anrufer A eine Text-und/oder multimediale Nachricht erstellt, welche an den Mobilfunkteilnehmer B übermittelt wird.

7. Verfahren für ein Mobilfunknetz (10) zur Kommunikation mit einem Mobilfunkteilnehmer B, welcher unmittelbar nicht erreichbar ist, nach einem der Ansprüche 1 bis 6, **dadurch gekennzeichnet, dass** Mittel zur Spracherkennung eingesetzt werden, um die Nachricht (36) zu erstellen oder auszuwählen.

8. Verfahren für ein Mobilfunknetz (10) zur Kommunikation mit einem Mobilfunkteilnehmer B, welcher unmittelbar nicht erreichbar ist, nach einem der Ansprüche 1 bis 7, **dadurch gekennzeichnet, dass** eine Rückrufnummer oder sonstige Identifikationskennung in der Nachricht (36) enthalten ist.

9. Verfahren für ein Mobilfunknetz (10) zur Kommunikation mit einem Mobilfunkteilnehmer (B), welcher unmittelbar nicht erreichbar ist, nach Anspruch 8, **dadurch gekennzeichnet, dass** die Rückrufnummer oder sonstige Identifikationskennung durch den jeweils zugehörigen Mobilfunkteilnehmernamen A ersetzt wird, sofern dieser in einer Liste des Mobilfunkendgeräts (14) des Mobilfunkteilnehmers B vorhanden ist.

10. Verfahren für ein Mobilfunknetz (10) zur Kommunikation mit einem Mobilfunkteilnehmer B, welcher unmittelbar nicht erreichbar ist, nach einem der Ansprüche 1 bis 9, **dadurch gekennzeichnet, dass** in vorgebbaren Intervallabständen durch die Vermittlungseinheit (24) versucht wird, dem Mobilfunkteilnehmer B zu signalisieren, dass eine Nachricht (36) vorliegt.

11. Verfahren für ein Mobilfunknetz (10) zur Kommunikation mit einem Mobilfunkteilnehmer B, welcher unmittelbar nicht erreichbar ist, nach einem der Ansprüche 1 bis *10,* **dadurch gekennzeichnet, dass** die Nachricht (36) an einen weiteren Kommunikationsteilnehmer C weiter- oder umgeleitet wird.

12. Verfahren für ein Mobilfunknetz (10) zur Kommunikation mit einem Mobilfunkteilnehmer B, welcher unmittelbar nicht erreichbar ist, nach einem der Ansprüche 1 bis *11,* **dadurch gekennzeichnet, dass** die Nachricht (36) mit verschiedenen Dringlichkeitsstufen übermittelt wird.

## Claims

1. A method for a mobile radio network (10) for the communication with a mobile subscriber B who is not immediately available, wherein the mobile subscriber B uses a mobile terminal (14) which can process transmitted messages (36), wherein the caller A transmits a message (36) to the mobile subscriber during the connection attempt, **characterized in that** a telephone exchange system (24) tries in pre-definable intervals to transfer the message (36) to the mobile subscriber B and if the mobile subscriber B is available, a receipt confirmation will be sent back to the caller A.

2. A method for a mobile radio network (10) for the communication with a mobile subscriber B, who is not immediately available, according to claim 1, **characterized in that** the message (36) will be transmitted as text message, especially as SMS or EMS, to the mobile subscriber B.

3. A method for a mobile radio network (10) for the communication with a mobile subscriber B, who is not immediately available, according to claim 1, **characterized in that** the message (36) will be transmitted as multimedia message, especially as an image, a video or acoustically.

4. A method for a mobile radio network (10) for the communication with a mobile subscriber B, who is not immediately available, according to one of the claims 1 through 3, **characterized in that** the caller A transmits a predefined message (36).

5. A method for a mobile radio network (10) for the communication with a mobile subscriber B, who is not immediately available, according to claim 4, **characterized in that** the caller A transmits a predefined message (36) which can be selected from a number of predefined messages (30a, 30b, 30c, 30d).

6. A method for a mobile radio network (10) for the communication with a mobile subscriber B, who is not immediately available, according to one of the claims 1 through 3, **characterized in that** the caller A creates a text message and/or multimedia message which will be transmitted to the mobile subscriber B.

7. A method for a mobile radio network (10) for the communication with a mobile subscriber B, who is not immediately available, according to one of the claims 1 through 6, **characterized in that** means for voice recognition are used in order to create or select the message (36).

8. A method for a mobile radio network (10) for the communication with a mobile subscriber B, who is not immediately available, according to one of the claims 1 through 7, **characterized in that** a callback number or other identification code is contained in the message (36).

9. A method for a mobile radio network (10) for the communication with a mobile subscriber B, who is not immediately available, according to claim 8, **characterized in that** the callback number or other identification code will be replaced by the respectively associated mobile subscriber name A, if this one is on a list of the mobile terminal (14) of the mobile subscriber B.

10. A method for a mobile radio network (10) for the communication with a mobile subscriber B, who is not immediately available, according to one of the claims 1 through 9, **characterized in that** the telephone exchange system (24) will try in pre-definable intervals to signalize to the mobile subscriber B that there is a message (36).

11. A method for a mobile radio network (10) for the communication with a mobile subscriber B, who is not immediately available, according to one of the claims 1 through 10, **characterized in that** the message (36) will be forwarded or redirected to another communication participant C.

12. A method for a mobile radio network (10) for the communication with a mobile subscriber B, who is not immediately available, according to one of the claims 1 through 11, **characterized in that** the message (36) will be transmitted with different priority levels.

## Revendications

1. Procédé destiné à un réseau radio mobile (10) pour la communication avec un abonné mobile B, qui n'est pas immédiatement joignable, l'abonné mobile B utilisant un terminal mobile (14) qui peut traiter des messages (36) transmis et l'appelant A transmettant un message (36) à l'abonné mobile B pendant la tentative de connexion, **caractérisé en ce qu**'une unité de commutation (24) essaie dans des intervalles prédéfinissables de transmettre le message (36) à l'abonné mobile B et si l'abonné mobile B peut être joint, un accusé de réception sera renvoyé à l'appelant A.

2. Procédé destiné à un réseau radio mobile (10) pour la communication avec un abonné mobile B, qui n'est pas immédiatement joignable, selon la revendication 1, **caractérisé en ce que** le message (36) est transmis comme message textuel, notamment comme SMS ou EMS, à l'abonné mobile B.

3. Procédé destiné à un réseau radio mobile (10) pour la communication avec un abonné mobile B, qui n'est pas immédiatement joignable, selon la revendication 1, **caractérisé en ce que** le message (36) est transmis comme message multimédia, notamment comme une image, un vidéo ou acoustiquement.

4. Procédé destiné à un réseau radio mobile (10) pour la communication avec un abonné mobile B, qui n'est pas immédiatement joignable, selon l'une des revendications 1 à 3, **caractérisé en ce que** l'appelant A transmet un message prédéfini (36).

5. Procédé destiné à un réseau radio mobile (10) pour la communication avec un abonné mobile B, qui n'est pas immédiatement joignable, selon la revendication 4, **caractérisé en ce que** l'appelant A transmet un message prédéfini (36) qui peut être sélectionné dans un nombre de messages prédéfinis (30a, 30b, 30c, 30d).

6. Procédé destiné à un réseau radio mobile (10) pour la communication avec un abonné mobile B, qui n'est pas immédiatement joignable, selon l'une des revendications 1 à 3, **caractérisé en ce que** l'appelant A crée un message textuel et/ou un message multimédia qui est transmis à l'abonné mobile B.

7. Procédé destiné à un réseau radio mobile (10) pour la communication avec un abonné mobile B, qui n'est pas immédiatement joignable, selon l'une des revendications 1 à 6, **caractérisé en ce que** des moyens de reconnaissance vocale sont utilisés pour créer ou sélectionner le message (36).

8. Procédé destiné à un réseau radio mobile (10) pour la communication avec un abonné mobile B, qui n'est pas immédiatement joignable, selon l'une des revendications 1 à 7, **caractérisé en ce qu**'un numéro de rappel ou un autre code d'identification est contenu dans le message (36).

9. Procédé destiné à un réseau radio mobile (10) pour la communication avec un abonné mobile B, qui n'est pas immédiatement joignable, selon la revendication 8, **caractérisé en ce que** le numéro de rappel ou l'autre code d'identification sera remplacé par le nom de l'abonné mobile respectivement associé, si celui-ci figure sur une liste du terminal mobile (14) de l'abonné mobile B.

10. Procédé destiné à un réseau radio mobile (10) pour la communication avec un abonné mobile B, qui n'est pas immédiatement joignable, selon l'une des revendications 1 à 9, **caractérisé en ce que** l'unité de commutation (24) essaie dans des intervalles prédéfinissables de signaler à l'abonné mobile B qu'il y a un message (36).

11. Procédé destiné à un réseau radio mobile (10) pour la communication avec un abonné mobile B, qui n'est pas immédiatement joignable, selon l'une des revendications 1 à 10, **caractérisé en ce que** le message (36) est transféré ou redirigé à un autre participant à la communication C.

12. Procédé destiné à un réseau radio mobile (10) pour la communication avec un abonné mobile B, qui n'est pas immédiatement joignable, selon l'une des revendications 1 à 11, **caractérisé en ce que** le message (36) est transmis avec des niveaux d'urgence différents.
